# EUROPEAN PATENT APPLICATION

(11) **EP 4 779 605 A1**
(43) Date of publication of application: **22.07.2026**
(21) Application number: 25864574.6
(22) Date of filing: 07.07.2025
(51) Int. Cl.: G08B 17/12, G08B 25/14, G07C 5/08, H04W 4/14, H04W 4/02, G01S 19/17, G06V 20/58, G06V 20/62, G06V 10/82, G01J 5/48

(54) **VEHICLE FIRE ALARM METHOD, VEHICLE'S BLACK BOX FOR PERFORMING METHOD, AND STORAGE MEDIUM STORING PROGRAM FOR EXECUTING METHOD**

(30) Priority: 22.11.2024 KR 20240167918 U; 04.07.2025 KR 20250089664 U
(71) Applicant: LG ENERGY SOLUTION, LTD., Seoul 07335 (KR)
(72) Inventor: CHO, Hyo Seok, Daejeon 34122 (KR)
(74) Representative: Plasseraud IP
(86) International application number: PCT/KR2025/009689
(87) International publication number: WO 2026/111082

(57) **Abstract**

A vehicle fire alarm method, a vehicle dashcam for performing the method, and a storage medium for storing a program to execute the method provides a vehicle fire alarm to a subject vehicle and surrounding vehicles when a fire is detected in the subject vehicle or a surrounding vehicle, thereby inducing the vehicles to rapidly move and preventing the spread of fire.

## Description

### [Technical Field]

The present disclosure relates to a vehicle fire alarm method, a vehicle dashcam box for performing the method, and a storage medium for storing a program to execute the method.

### [Background Art]

When a fire is detected in a subject vehicle or a surrounding vehicle due to ignition of a battery installed in the subject vehicle, it is necessary to rapidly notify the subject vehicle and the surrounding vehicle of the fire occurrence to prevent the spread of the fire.

### [Disclosure]

### [Technical Problem]

An embodiment of the present disclosure provides a vehicle fire alarm method, a vehicle dashcam for performing the method, and a storage medium for storing a program to execute the method for providing a vehicle fire alarm to a subject vehicle and surrounding vehicles when a fire is detected in the subject vehicle or a surrounding vehicle having a fire is detected.

The objects to be achieved in the present disclosure are not limited to the objects mentioned above, and can be expanded in various manners without departing from the spirit and scope of the present disclosure.

### [Technical Solution]

A vehicle fire alarm method according to an embodiment of the present disclosure is a vehicle fire alarm method performed by a dashcam mounted on a vehicle, including obtaining information on whether a fire has occurred in the vehicle or a surrounding vehicle located around the vehicle based on images captured by the dashcam, and providing a fire alarm to at least one of a user terminal corresponding to the dashcam or a user terminal corresponding to a surrounding dashcam located around the dashcam if it is determined that a fire has occurred in the vehicle or the surrounding vehicle.

The providing a fire alarm may include providing a fire alarm to the user terminal corresponding to the surrounding dashcam identified using GPS location information.

The providing a fire alarm may include providing a fire alarm message including GPS location information of the dashcam to a management server managing the dashcam such that the fire alarm is provided to at least one of the user terminal corresponding to the dashcam or the user terminal corresponding to the surrounding dashcam through the management server.

The management server may identify the surrounding dashcam located within a preset radius based on the GPS location information included in the fire alarm message, and provide the fire alarm to the user terminal corresponding to the identified surrounding dashcam.

When the management server receives the fire alarm message from at least two dashcams located within a preset area, the management server may provide the fire alarm to at least one of the user terminal corresponding to the dashcam or user terminals corresponding to the surrounding dashcams.

The providing a fire alarm may include providing a fire alarm to the user terminal corresponding to a vehicle number of the surrounding vehicle identified using the images.

The providing a fire alarm may include identifying the vehicle number of the surrounding vehicle based on the images, and providing a fire alarm message including the identified vehicle number to the management server managing the dashcam such that a fire alarm is provided to the user terminal corresponding to the vehicle number through the management server.

The providing a fire alarm may include providing a fire alarm message including the images to the management server managing the dashcam such that a fire alarm is provided to the user terminal corresponding to the vehicle number of the surrounding vehicle identified based on the images through the management server.

The obtaining information on whether a fire has occurred may include obtaining information on whether a fire has occurred in the vehicle or the surrounding vehicle through image analysis based on the images.

The obtaining information on whether a fire has occurred may include obtaining information on whether a fire has occurred in the vehicle or the surrounding vehicle based on the images using a neural network trained and constructed in advance.

The obtaining information on whether a fire has occurred may include obtaining information on whether a fire has occurred in the vehicle or the surrounding vehicle if the images are thermal images.

The obtaining information on whether a fire has occurred may include obtaining information on whether a fire has occurred in the vehicle or the surrounding vehicle based on an internal temperature value of the dashcam, an external temperature value of the vehicle, and/or the images.

A computer-readable storage medium according to an embodiment of the present disclosure stores a program to execute the vehicle fire alarm method on a computer.

A dashcam according to an embodiment of the present disclosure is a dashcam mounted on a vehicle, including a camera for capturing images of surroundings of the dashcam, and a processor configured to obtain information on whether a fire has occurred in the vehicle or a surrounding vehicle located around the vehicle based on the images captured by the camera, and provide a fire alarm to at least one of a user terminal corresponding to the dashcam or a user terminal corresponding to a surrounding dashcam located around the dashcam if it is determined that a fire has occurred in the vehicle or the surrounding vehicles.

The processor may provide a fire alarm to the user terminal corresponding to the surrounding dashcam identified using GPS location information.

### [Advantageous Effects]

According to an embodiment of the present disclosure, when a fire is detected in a subject vehicle or a surrounding vehicle having a fire is detected, a vehicle fire alarm can be provided to the subject vehicle and surrounding vehicles, thereby inducing vehicles to rapidly move and preventing the spread of fire.

The effects according to various embodiments of the present disclosure are not limited to the effects described above, and it is obvious to those skilled in the art that various effects are inherent in the present disclosure.

### [Description of Drawings]

FIG. 1 is a block diagram illustrating a vehicle fire alarm system according to an embodiment of the present disclosure.
FIG. 2 is a block diagram illustrating a dashcam illustrated in FIG. 1.
FIG. 3 is a flowchart illustrating a vehicle fire alarm method according to an embodiment of the present disclosure.
FIG. 4 is a flowchart illustrating an example of a fire alarm provision step illustrated in FIG. 3.
FIG. 5 is a flowchart illustrating another example of the fire alarm provision step illustrated in FIG. 3.
FIG. 6 is a block diagram illustrating another example of the fire alarm provision step illustrated in FIG. 3.

### [Mode for Disclosure]

Hereinafter, embodiments of the present disclosure will be described in detail with reference to the attached drawings. The advantages and features of the embodiments of the present disclosure, and methods for achieving the same will become clear with reference to the contents described in detail below together with the attached drawings. However, the embodiments of the present disclosure are not limited to the embodiments described below, but may be implemented in various different forms, and the embodiments of the present disclosure are defined only by the scope of the claims.

Like reference numerals refer to like elements throughout the specification. Unless otherwise defined, all terms (including technical and scientific terms) used in the specification may be used in meanings that can be commonly understood by a person having ordinary knowledge in the technical field to which the embodiments of the present disclosure belong. In addition, terms defined in a commonly used dictionary shall not be ideally or excessively interpreted unless explicitly specifically defined.

In the present disclosure, the terms "first", "second", etc. are used to distinguish a particular component from other components, and the components described above are not limited by these terms. For example, the "first" component may be used to refer to an element of the same or similar form as the "second" component.

In this specification, identification symbols (e.g., a, b, c, etc.) for each step are used for convenience of explanation, and the identification symbols do not describe the order of steps, and the steps may occur in a different order than the stated order unless the context clearly indicates a specific order. That is, the steps may occur in the same order as the stated order, may be performed substantially simultaneously, or may be performed in the opposite order.

In the present disclosure, the terms "comprise", "comprising", and the like may indicate the presence of features (for example, numerical values, functions, operations, or components such as parts), but such terms do not exclude additional features.

Hereinafter, a vehicle fire alarm, a vehicle dashcam for performing the method, and a storage medium for storing a program to execute the method according to an embodiment of the present disclosure will be described in detail with reference to the attached drawings.

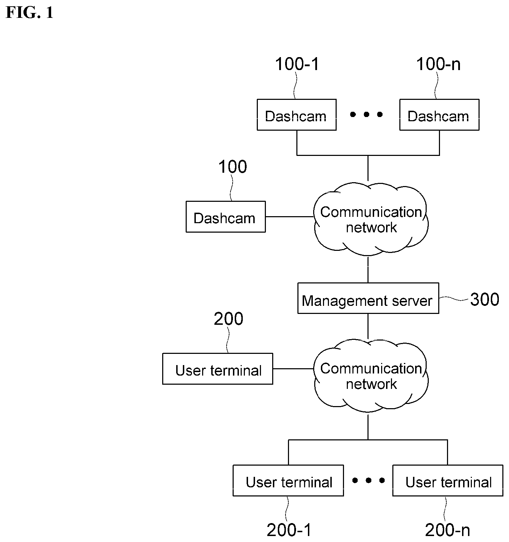

First, a vehicle fire alarm system according to an embodiment of the present disclosure will be described with reference to FIG. 1.

FIG. 1 is a block diagram illustrating the vehicle fire alarm system according to an embodiment of the present disclosure.

Referring to FIG. 1, the vehicle fire alarm system according to an embodiment of the present disclosure may include a plurality of dashcams 100 and 100-1 to 100-n, a management server 300 connected to the plurality of dashcams 100 and 100-1 to 100-n through a communication network, and a plurality of user terminals 200 and 200-1 to 200-n connected to the management server 300 through a communication network.

The dashcam 100 is installed in a vehicle, and may capture images of the interior and exterior of the vehicle and store the captured images.

In particular, the dashcam 100 may capture images of the surroundings thereof, i.e., the surroundings of the vehicle and obtain information on whether a fire has occurred in the vehicle or a surrounding vehicle located around the vehicle based on the captured images.

Upon determining that a fire has occurred in the vehicle or a surrounding vehicle, the dashcam 100 may provide a fire alarm to at least one of a user terminal 200 corresponding to the dashcam 100 or user terminals 200-1 to 200-n corresponding to surrounding dashcams 100-1 to 100-n located around the dashcam 100 in order to induce evacuation of the vehicle and surrounding vehicles.

The management server 300 refers to a server that manages the dashcam 100 and/or the vehicle equipped with the dashcam 100. When the management server 300 receives a fire alarm from the dashcam 100, the management server 300 may provide the fire alarm to at least one of the user terminal 200 corresponding to the dashcam 100, the user terminals 200-1 to 200-n corresponding to the surrounding dashcams 100-1 to 100-n located around the dashcam 100, or user terminals 200-1 to 200-n corresponding to surrounding vehicles located around the dashcam 100. To this end, the management server 300 may store vehicle information such as vehicle model, vehicle manufacturer, vehicle number, and information for identifying the user terminal 200 of the owner/driver, and dashcam information such as the vehicle number of the subject vehicle, the GPS location of the dashcam 100, and information for identifying the user terminal 200 of the owner/driver of the subject vehicle.

The user terminal 200 refers to a terminal possessed by the driver or owner of the vehicle equipped with the dashcam 100. Upon reception of a fire alarm from the management server 300, the user terminal 200 may output the fire alarm through a visual method, an auditory method, and/or a tactile method. Here, the user terminal 200 may be a terminal equipped with a memory and a microprocessor and having a computing capability, such as a desktop computer, a notebook computer, a workstation, a palmtop computer, a tablet, a personal digital assistant (PDA), a web pad, a smartphone, and a mobile phone.

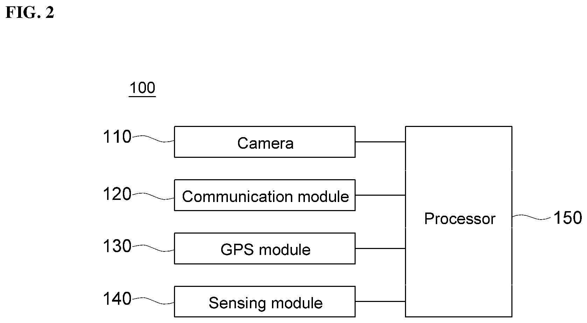

A dashcam according to an embodiment of the present disclosure will be described with reference to FIG. 2.

FIG. 2 is a block diagram illustrating the dashcam illustrated in FIG. 1.

Referring to FIG. 2, the dashcam 100 may include a camera 110, a communication module 120, a GPS module 130, a sensing module 140, and a processor 150.

The camera 110 may capture an image of the interior of a vehicle equipped with the dashcam 100 to obtain an internal image, or may capture an image of the exterior of the vehicle equipped with the dashcam 100 to obtain an external image. Here, the camera 110 may include at least one of a front camera (not shown) that captures a front view image of the vehicle equipped with the dashcam 100, a rear camera (not shown) that captures a rear view image of the vehicle equipped with the dashcam 100, a left camera (not shown) that captures a left view image of the vehicle equipped with the dashcam 100, or a right camera (not shown) that captures a right view image of the vehicle equipped with the dashcam 100. The camera 110 may be composed of an RGB capturing module (not shown) or a thermal imaging module (not shown).

The GPS module 130 may measure GPS location information of the dashcam 100 and provide the same to the processor 150.

The sensing module 140 may measure an internal temperature value of the dashcam 100 and an external temperature value of the vehicle equipped with the dashcam 100 and provide the same to the processor 150. Here, the sensing module 140 may include a first temperature sensor (not shown) that measures the internal temperature of the dashcam 100 and a second temperature sensor (not shown) that measures the external temperature of the vehicle equipped with the dashcam 100.

The processor 150 may obtain information on whether a fire has occurred in the vehicle equipped with the dashcam 100 or in a surrounding vehicle located around the vehicle equipped with the dashcam 100 based on images acquired through the camera 110.

Upon determining that a fire has occurred in the vehicle or a surrounding vehicle, the processor 150 may transmit/receive data to/from the management server 300 through the communication module 120 to provide a fire alarm to at least one of the user terminal 200 corresponding thereto or user terminals 200-1 to 200-n corresponding to surrounding dashcams 100-1 to 100-n located around the dashcam 100.

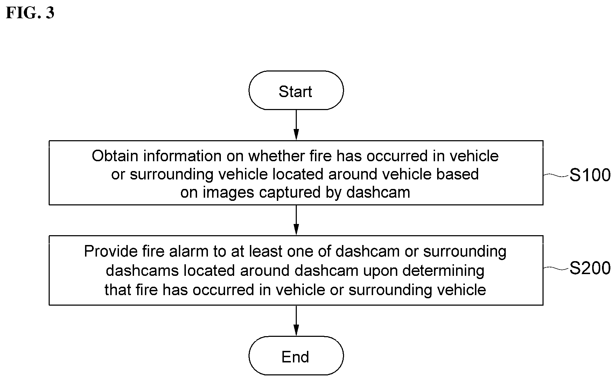

A vehicle fire alarm method according to an embodiment of the present disclosure will be described with reference to FIG. 3 to FIG. 6.

FIG. 3 is a flowchart illustrating the vehicle fire alarm method according to an embodiment of the present disclosure.

Referring to FIG. 3, the processor 150 of the dashcam 100 may obtain information on whether a fire has occurred in the vehicle or a surrounding vehicle located around the vehicle based on images captured by the dashcam 100 (S100).

At this time, the processor 150 may obtain information on whether a fire has occurred in the vehicle or a surrounding vehicle through image analysis based on the images. For example, the processor 150 may determine whether a fire has occurred in the vehicle or a surrounding vehicle by recognizing change in pixel colors of the images through image analysis. Here, the processor 150 may obtain information on whether a fire has occurred in the vehicle or a surrounding vehicle based on the images by using a neural network that has been trained and constructed in advance. The neural network includes a convolutional neural network (CNN), etc.

In addition, the processor 150 may obtain information on whether a fire has occurred in the vehicle or a surrounding vehicle based on the images if the images are thermal images. For example, the processor 150 may determine whether a fire has occurred in the vehicle or a surrounding vehicle through thermal energy analysis of the images.

In addition, the processor 150 may obtain information on whether a fire has occurred in the vehicle or a surrounding vehicle based on the internal temperature value of the dashcam 100, the external temperature value of the vehicle, and/or the images of the dashcam 100. For example, the processor 150 may determine that a fire has occurred in the vehicle or a surrounding vehicle if the internal temperature value of the dashcam 100 reaches a preset first threshold value and the external temperature value of the vehicle reaches a preset second threshold value. Here, when a fire has occurred in a surrounding vehicle due to thermal runaway of a battery, or the like, the external temperature of the vehicle is much higher than the internal temperature of the vehicle, and thus the second threshold value may be set to be greater than the first threshold value. The processor 150 may finally determine that a fire has occurred in the vehicle or a surrounding vehicle if the internal temperature value of the dashcam 100 reaches the preset first threshold value, the external temperature value of the vehicle reaches the preset second threshold value, and it is determined that a fire has occurred in the vehicle or a surrounding vehicle from an image analysis result.

Upon determining that a fire has occurred in the vehicle or a surrounding vehicle, the processor 150 may provide a fire alarm to at least one of the user terminal 200 corresponding to the dashcam 100 or the user terminals 200-1 to 200-n corresponding to the surrounding dashcams 100-1 to 100-n located around the dashcam 100 (S200).

At this time, the processor 150 may provide a fire alarm to the user terminals 200-1 to 200-n corresponding to the surrounding dashcams 100-1 to 100-n identified using GPS location information of the processor 150. To this end, the processor 150 provides a fire alarm message including the GPS location information thereof to the management server 300 such that a fire alarm can be provided to at least one of the user terminal 200 corresponding to the dashcam 100 or the user terminals 200-1 to 200-n corresponding to the surrounding dashcams 100-1 to 100-n through the management server 300.

In addition, the processor 150 may provide a fire alarm to user terminals 200-1 to 200-n corresponding to vehicle numbers of surrounding vehicles identified using the images.

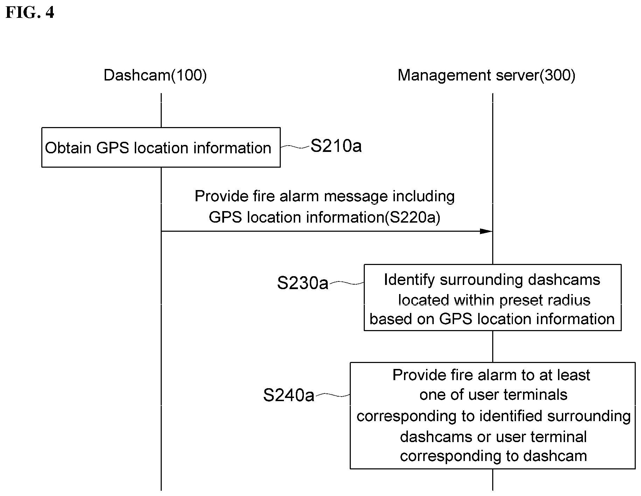

FIG. 4 is a flowchart illustrating an example of the fire alarm provision step illustrated in FIG. 3.

Referring to FIG. 4, the processor 150 of the dashcam 100 may obtain GPS location information thereof (S210a).

Then, the processor 150 may provide a fire alarm message including the GPS location information thereof to the management server 300 (S220a).

Upon reception of the fire alarm message from the dashcam 100, the management server 300 may identify surrounding dashcams 100-1 to 100-n located within a preset radius (5 meters, 10 meters, or the like) based on the GPS location information (S230a).

Then, the management server 300 may provide a fire alarm to at least one of the user terminals 200-1 to 200-n corresponding to the identified surrounding dashcams 100-1 to 100-n or the user terminal 200 corresponding to the dashcam 100 (S240a).

When the management server 300 receives fire alarm messages from at least two dashcams 100 located within a preset area, the management server 300 may provide a fire alarm to at least one of the user terminals 200 corresponding to the dashcams 100 or the user terminals 200-1 to 200-n corresponding to the surrounding dashcams 100-1 to 100-n. For example, in order to prevent a false fire alarm, if fire alarm messages are received from three or more dashcams 100 within a preset area, the management server 300 may determines that a fire has occurred and transmit a fire alarm to at least one of the user terminals 200-1 to 200-n corresponding to the identified surrounding dashcams 100-1 to 100-n or the user terminals 200 corresponding to the dashcams 100, and if a fire alarm message is received from less than three dashcams 100, the management server 300 may not transmit a fire alarm to the user terminals 200.

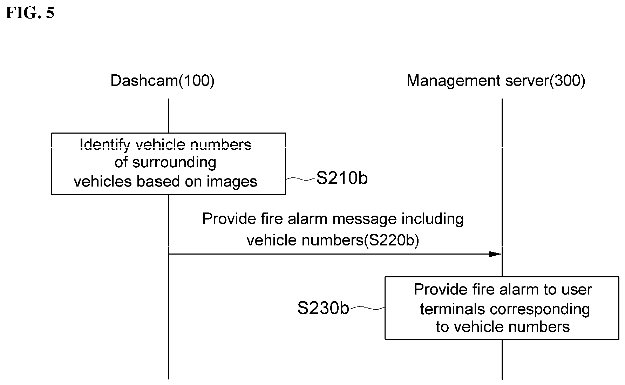

FIG. 5 is a flowchart illustrating another example of the fire alarm provision step illustrated in FIG. 3.

Referring to FIG. 5, the processor 150 of the dashcam 100 may identify the vehicle numbers of surrounding vehicles based on images (S210b).

Then, the processor 150 may provide a fire alarm message including the identified vehicle numbers of the surrounding vehicles to the management server 300 (S220b).

Upon reception of the fire alarm message from the dashcam 100, the management server 300 may provide a fire alarm to the user terminals 200-1 to 200-n corresponding to the vehicle numbers of the surrounding vehicles (S230b).

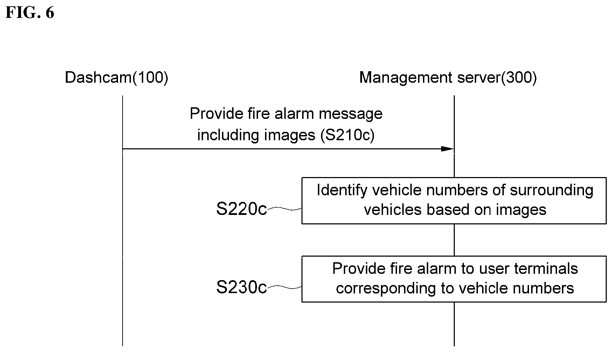

FIG. 6 is a flowchart illustrating another example of the fire alarm provision step illustrated in FIG. 3.

Referring to FIG. 6, the processor 150 of the dashcam 100 may provide a fire alarm message including images to the management server 300 (S210c).

Upon reception of the fire alarm message from the dashcam 100, the management server 300 may identify vehicle numbers of surrounding vehicles based on the images (S220c).

Then, the management server 300 may provide a fire alarm to the user terminals 200-1 to 200-n corresponding to the vehicle numbers of the surrounding vehicles (S230c).

The operations according to the embodiments of the present disclosure described above can be implemented in the form of program instructions that can be performed through various computer means and recorded on a computer-readable storage medium. The computer-readable storage medium refers to any medium that participates in providing instructions to a processor for execution. The computer-readable storage medium may include program instructions, data files, data structures, or a combination thereof. For example, the computer-readable storage medium may include a magnetic medium, an optical storage medium, a memory, etc. The computer program may be distributed on computer systems connected through a network, and computer-readable code may be stored and executed in a distributed manner. Functional programs, code, and code segments for implementing the embodiments of the present disclosure may be easily inferred by programmers in the technical field to which the embodiments of the present disclosure belong.

The embodiments of the present disclosure are intended to explain the technical idea, and the scope of the technical idea of the embodiments of the present disclosure is not limited by these embodiments. The protection scope of the embodiments of the present disclosure should be interpreted by the following claims, and all technical ideas within the equivalent scope should be interpreted as being included in the scope of the rights of the embodiments of the present disclosure.

### <Detailed Description of Main Elements>

100, 100-1 to 100-n: Dashcam
110: Camera
120: Communication module
130: GPS module
140: Sensing module
150: Processor
200, 200-1 to 200-n: User terminal
300: Management server

## Claims

1. A vehicle fire alarm method performed by a dashcam mounted on a vehicle, comprising:
obtaining information on whether a fire has occurred in the vehicle or a surrounding vehicle located around the vehicle based on images captured by the dashcam; and
providing a fire alarm to at least one of a user terminal corresponding to the dashcam or a user terminal corresponding to a surrounding dashcam located around the dashcam if it is determined that a fire has occurred in the vehicle or the surrounding vehicle.

2. The vehicle fire alarm method of claim 1, wherein the providing a fire alarm comprises providing a fire alarm to the user terminal corresponding to the surrounding dashcam identified using GPS location information.

3. The vehicle fire alarm method of claim 2, wherein the providing a fire alarm comprises providing a fire alarm message including GPS location information of the dashcam to a management server managing the dashcam such that the fire alarm is provided to at least one of the user terminal corresponding to the dashcam or the user terminal corresponding to the surrounding dashcam through the management server.

4. The vehicle fire alarm method of claim 3, wherein the management server identifies the surrounding dashcam located within a preset radius based on the GPS location information included in the fire alarm message, and provides the fire alarm to the user terminal corresponding to the identified surrounding dashcam.

5. The vehicle fire alarm method of claim 3, wherein, when the management server receives the fire alarm message from at least two dashcams located within a preset area, the management server provides the fire alarm to at least one of the user terminal corresponding to the dashcam or user terminals corresponding to the surrounding dashcams.

6. The vehicle fire alarm method of claim 1, wherein the providing a fire alarm comprises providing a fire alarm to the user terminal corresponding to a vehicle number of the surrounding vehicle identified using the images.

7. The vehicle fire alarm method of claim 6, wherein the providing a fire alarm comprises identifying the vehicle number of the surrounding vehicle based on the images, and providing a fire alarm message including the identified vehicle number to the management server managing the dashcam such that a fire alarm is provided to the user terminal corresponding to the vehicle number through the management server.

8. The vehicle fire alarm method of claim 6, wherein the providing a fire alarm comprises providing a fire alarm message including the images to the management server managing the dashcam such that a fire alarm is provided to the user terminal corresponding to the vehicle number of the surrounding vehicle identified based on the images through the management server.

9. The vehicle fire alarm method of claim 1, wherein the obtaining information on whether a fire has occurred comprises obtaining information on whether a fire has occurred in the vehicle or the surrounding vehicle through image analysis based on the images.

10. The vehicle fire alarm method of claim 9, wherein the obtaining information on whether a fire has occurred comprises obtaining information on whether a fire has occurred in the vehicle or the surrounding vehicle based on the images using a neural network trained and constructed in advance.

11. The vehicle fire alarm method of claim 1, wherein the obtaining information on whether a fire has occurred comprises obtaining information on whether a fire has occurred in the vehicle or the surrounding vehicle if the images are thermal images.

12. The vehicle fire alarm method of claim 1, wherein the obtaining information on whether a fire has occurred comprises obtaining information on whether a fire has occurred in the vehicle or the surrounding vehicle based on an internal temperature value of the dashcam, an external temperature value of the vehicle, and/or the images.

13. A computer-readable storage medium for storing a program to execute the vehicle fire alarm method of any one of claims 1 to 12 on a computer.

14. A dashcam mounted on a vehicle, comprising:
a camera for capturing images of surroundings of the dashcam; and
a processor configured to obtain information on whether a fire has occurred in the vehicle or a surrounding vehicle located around the vehicle based on the images captured by the camera, and provide a fire alarm to at least one of a user terminal corresponding to the dashcam or a user terminal corresponding to a surrounding dashcam located around the dashcam if it is determined that a fire has occurred in the vehicle or the surrounding vehicles.

15. The dashcam of claim 14, wherein the processor provides a fire alarm to the user terminal corresponding to the surrounding dashcam identified using GPS location information.
